# FASCICULE DE BREVET EUROPEEN

(11) **EP 1 349 241 B1**
(45) Date de publication et mention de la délivrance du brevet: **09.05.2007**
(21) Numéro de dépôt: 03290785.9
(22) Date de dépôt: 27.03.2003
(51) Int. Cl.: H01R 13/00

(54) **Connecteur mixte**
Gemischter Verbinder
Mixed connector

(30) Priorité: 27.03.2002 FR 0203840
(43) Date de publication de la demande: 01.10.2003
(73) Titulaire: Peugeot Citroen Automobiles, 78140 Velizy-Villacoublay (FR)
(72) Inventeur: Hermen, Frédéric, 25260 Longevelle sur Doubs (FR)
(74) Mandataire: De Cuenca, Emmanuel Jaime

(56) Documents cités:
- FR-A- 2 769 136
- US-A- 4 652 064

## Description

L'invention concerne les dispositifs de traversée de paroi et plus particulièrement celles disposées près d'un essuie glace équipé d'un lave glace. Certains véhicules en particulier sont équipés d'un essuie vitre arrière avec un gicleur lave-glace dans le volet arrière.

Pour alimenter ce gicleur sur le volet, le tuyau d'alimentation chemine dans le volet.

Aujourd'hui, l'habillage du volet se fait en bord de ligne de montage. Le faisceau électrique du volet arrière est monté sur le volet, le passage dans l'habitacle se fait par une boutonnière placée sur la structure qui reçoit un soufflet pour l'étanchéité. La connexion du faisceau volet avec le faisceau habitacle se fait par un connecteur qui est fixé sur la structure.

Pour le tuyau lave-vitre, un raccord est fait avec un manchon. Ce manchon est positionné près d'une agrafe pour éviter tous les types de sollicitations.

Demain le volet constituera un seul module. Dans cette optique, le volet arrivera en bord de ligne complet (faisceau, vitre arrière, garniture, essuie-vitre, gicleur...) . Il sera ensuite fixé sur la structure en même temps que les équilibreurs. La connexion électrique sera faite par un connecteur de traversée de tôle. La partie fixe sera incluse au faisceau habitacle et la partie mobile au faisceau volet.

Pour ce qui est de l'alimentation en eau du gicleur, le problème de la traversée de la tôle pour le tuyau lave-vitre reste entier.

En effet, le volet étant complet et l'habitacle complètement garni, il faut trouver une solution simple et industrielle pour raccorder les tuyaux lave-vitre de l'habitacle et du volet.

FR-A-2 769 136 et US-A4 652 064 proposent des dispositifs selon le préambule de la revendication 1.

La solution proposée dans le dispositif de l'invention est un connecteur de traversée de cloison qui est équipé en son centre d'un passage étanche pour un liquide. La partie dédié à la connexion reste autour de ce passage.

La connexion électrique se fait sur la périphérie du connecteur de manière classique.

La partie fixe du connecteur vient se loger dans un trou sur la paroi avec un détrompage pour assurer une position précise de ce dernier sur la paroi.

Une fois en position, le maintien est assuré par un écrou qui vient se visser sur la périphérie du connecteur.

Chaque fil du faisceau est équipé d'une languette qui va se loger dans une alvéole. Chaque alvéole est repérée en fonction de sa position. La première languette du connecteur mobile ou porte languette est associée à la première alvéole du connecteur fixe ou porte clip.

Le connecteur porte languette se positionne sur le connecteur porte clip par un système de détrompage afin d'assurer que le faisceau soit connecté dans le bon sens.

Le dispositif de traversée d'une paroi selon l'invention est étanche et il est caractérisé en ce qu'il comprend à la fois un connecteur électrique et une canalisation de liquide. Le connecteur comprenant une partie mâle et une partie femelle, la canalisation étant située dans le connecteur.

Selon une caractéristique particulière de l'invention, la canalisation est placée au centre du connecteur électrique. Le connecteur présente un évidement central dans lequel peut passer le liquide à acheminer.

Selon une caractéristique particulière de l'invention, le connecteur est en deux parties mâle et femelle, de façon classique, et une première partie est disposée sur la surface à traverser. Cette première partie est fixée sur la surface à traverser qui est le volet dans l'exemple.

Selon une caractéristique particulière, la canalisation peut être un tube souple en deux parties, chaque partie étant solidaire à l'une des parties du connecteur. De la même façon que les fils électriques sont solidaires de chaque partie du connecteur, chaque partie du tube est fixée de façon étanche à chaque partie du connecteur. Chaque partie du connecteur peut aussi être moulée d'une seule pièce avec la canalisation et assure ainsi l'étanchéité.

Selon une caractéristique particulière de l'invention, la première partie du connecteur disposée sur la surface à traverser est équipé d'un joint d'étanchéité. La canalisation devant être clippée en même temps que la connexion électrique, l'étanchéité doit être réalisée lors du clippage.

Selon une caractéristique particulière de l'invention, le joint d'étanchéité est placé sur une partie conique du connecteur. Cette forme facilite l'engagement et le guidage de la partie mobile de la canalisation sur la partie fixe. Ce joint peut indifféremment être placé sur la partie mâle ou la partie femelle.

Selon une caractéristique particulière de l'invention, la deuxième partie du connecteur présente une partie saillante en forme de cône complémentaire à la première partie.

Selon une caractéristique particulière de l'invention, la partie saillante appuie sur le joint d'étanchéité quand le connecteur est assemblé. Cette pression assure ainsi l'étanchéité de la canalisation dans cette zone.

L'invention sera mieux comprise à la lecture de la description qui va suivre donnée uniquement à titre d'exemple et faite en se référant aux dessins annexés dans lesquels:

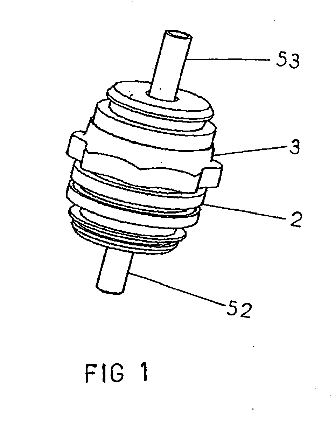

- la figure 1 est une vue en perspective du dispositif selon l'invention,
- la figure 2 est une vue en perspective de la partie mâle du dispositif,
- la figure 3 est une vue en perspective de la partie femelle du dispositif,
- la figure 4 est une vue en coupe du dispositif en position ouverte et en position connectée,
- la figure 5 est un détail de la jonction de la canalisation selon l'invention en position ouverte et en position connectée.

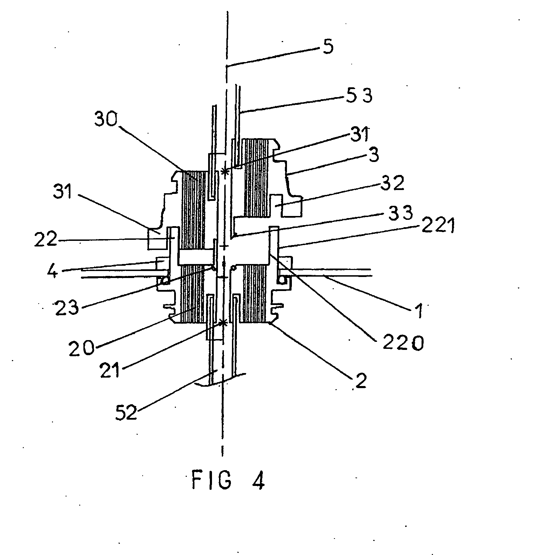

Le dispositif selon l'invention est placé sur la surface à traverser 1, un volet arrière par exemple (cf. figure 4), et il comprend deux parties 2 et 3.

La première partie 2 ou partie femelle, est fixée sur la surface 1 par un écrou 4. Elle comprend une zone de connexion électrique 20, des alvéoles, où arrivent les câbles d'alimentation (non représentés) et une zone de canalisation 5. On peut donc assimiler le dispositif à un connecteur particulier. Nous appellerons donc connecteur le dispositif.

Le milieu de la partie 2 du connecteur est percé d'un trou 21 qui débouche d'un côté sur la canalisation 52 d'arrivée de liquide et qui est ouverte de l'autre côté 23.

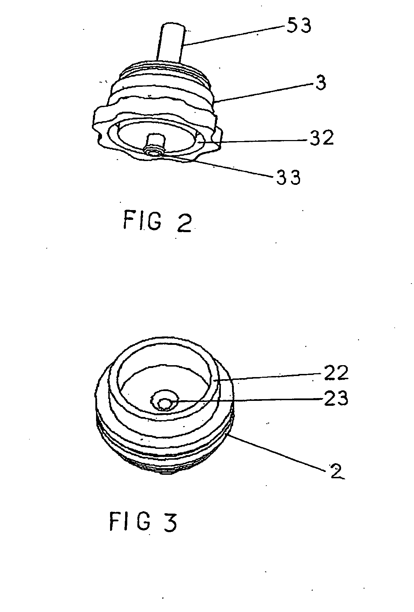

Comme on le voit à la figure 3, la périphérie de cette partie 2 présente un cylindre en saillie 22 qui permet le serrage de l'écrou 4, ainsi que le guidage et le positionnement de l'autre partie 3 du dispositif lors de son montage. L'extérieur 221 du cylindre 22 est fileté.

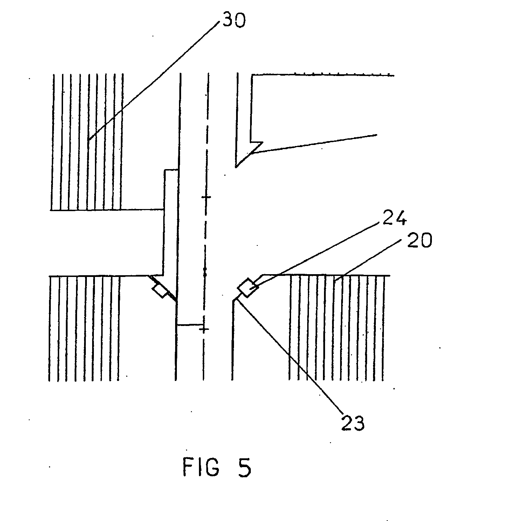

L'ouverture 23 est de forme conique et comprend un joint d'étanchéité circulaire 24 (cf. figure 5).

La deuxième partie 3 ou partie mâle, comprend une zone de connexion électrique 30, ainsi que des languettes, où arrivent des câbles d'alimentation électrique (non représentés).

Le milieu de cette partie 3 est également percé d'un trou 31 qui de façon symétrique à la première partie, débouche d'un côté sur la canalisation 53 et de l'autre présente une saillie en forme de cône 33.

Comme on peut le voir à la figure 2, un creux 32 périphérique de forme cylindrique complémentaire au cylindre 22 assure le positionnement de la partie 3 au montage. La paroi 320 du cylindre 32 coopère avec l'intérieur 220 du cylindre 22 pour permettre l'accrochage de la pièce 3 sur la pièce 2.

Nous allons maintenant décrire le montage complet du dispositif.

L'opérateur doit tout d'abord fixer la partie femelle 2 du connecteur sur la surface 1 à traverser. Pour cela, il introduit d'abord la partie 2 dans le trou qui traverse la paroi 1. Un système de détrompage classique lui permet de positionner le dispositif dans le bon sens. Il visse ensuite l'écrou 4 sur l'extérieur fileté 221 du cylindre 22. La pièce est ainsi prête à être montée sur le véhicule.

Une fois la pièce montée sur le véhicule, l'opérateur n'a plus qu'à clipper la partie mâle 3 sur la partie femelle 2. Cette action va permettre à la fois:
- l'engagement des languettes du faisceau électrique (non représenté) dans les alvéoles correspondantes,
- le serrage du joint d'étanchéité 24 ce qui assure l'étanchéité de la canalisation 5.

Afin de garantir le bon positionnement de chaque languette dans l'alvéole correspondante, un système de détrompage connu (non représenté) est prévu sur les deux parties 2 et 3 du dispositif.

L'essuie glace peut alors fonctionner avec son gicleur.

## Revendications

1. Dispositif de traversée étanche d'une paroi (1) comprenant à la fois un connecteur électrique (2, 3) et une canalisation de liquide (5) **caractérisé en ce que** la canalisation de liquide (5) est placée au centre du connecteur électrique (2, 3), la connexion électrique se faisant sur la périphérie du connecteur, le connecteur électrique (2,3) comprenant une partie mâle (3) et une partie femelle (2) destinées à être assemblées par accrochage ou par clippage et **en ce que** la partie mâle (3) et la partie femelle (2) présentent chacune un évidement central dans lequel peut passer le liquide à acheminer, la partie femelle (2) étant équipée d'un joint d'étanchéité (24).

2. Dispositif selon la revendication 1, **caractérisé en ce que** le joint d'étanchéité (24) est placé sur une partie conique (23) du connecteur (2).

3. Dispositif selon la revendication 2, **caractérisé en ce que** la deuxième partie (3) du connecteur présente une partie saillante (33) en forme de cône complémentaire à la première partie (23).

4. Dispositif selon la revendication 3, **caractérisé en ce que** la partie saillante (33) appuie sur le joint d'étanchéité (24) quand le connecteur (2, 3) est assemblé.

## Claims

1. Sealed wall-penetrating device (1) comprising both an electrical connector (2, 3) and a liquid supply line (5) **characterised in that** the liquid supply line (5) is positioned in the centre of the electrical connector (2, 3), the electric connection being made on the periphery of the connector, the electrical connector (2, 3) comprising a male part (3) and a female part (2) intended to be assembled by coupling or clipping and **in that** the male part (3) and the female part (2) each have a central recess through which the liquid to be conveyed can pass, the female part (2) being equipped with a gasket.

2. Device according to Claim 1, **characterised in that** the gasket (24) is positioned on a conical part (23) of the connector (2).

3. Device according to Claim 2, **characterised in that** the second part (3) of the connector presents a protruding part (33) in the shape of a cone complementary to the first part (23).

4. Device according to Claim 3, **characterised in that** the protruding part (33) presses on the gasket (24) when the connector (2, 3) is assembled.

## Patentansprüche

1. Vorrichtung zur dichten Durchführung durch eine Wand (1), die sowohl einen elektrischen Verbinder (2, 3) als auch eine Leitung (5) für eine Flüssigkeit aufweist, **dadurch gekennzeichnet, dass** die Leitung (5) für Flüssigkeit in der Mitte des elektrischen Verbinders (2, 3) angeordnet ist, wobei die elektrische Verbindung an der Peripherie des Verbinders hergestellt wird, wobei der elektrische Verbinder (2, 3) einen Einsteckabschnitt (3) und einen Aufnahmeabschnitt (2) aufweist, die durch Einhaken oder Klemmen zusammengefügt werden, und **dadurch**, dass der Einsteckabschnitt (3) und der Aufnahmeabschnitt (2) jeweils in der Mitte eine Ausnehmung besitzen, durch die die zu transportierende Flüssigkeit fließen kann, wobei der Aufnahmeabschnitt (2) mit einer Dichtung (24) versehen ist.

2. Vorrichtung nach Anspruch 1, **dadurch gekennzeichnet, dass** die Dichtung (24) an einem konischen Abschnitt (23) des Verbinders (2) angeordnet ist.

3. Vorrichtung nach Anspruch 2, **dadurch gekennzeichnet, dass** der zweite Abschnitt (3) des Verbinders einen vorspringenden Abschnitt (33) in Kegelform aufweist, der komplementär zum ersten Abschnitt (23) ist.

4. Vorrichtung nach Anspruch 3, **dadurch gekennzeichnet, dass** der vorspringende Abschnitt (33) auf die Dichtung (24) drückt, wenn der Verbinder (2, 3) zusammengefügt ist.
